# EUROPEAN PATENT SPECIFICATION

(11) **EP 3 499 532 B1**
(45) Date of publication and mention of the grant of the patent: **07.12.2022**
(21) Application number: 17207538.4
(22) Date of filing: 15.12.2017
(51) Int. Cl.: H01G 11/26, H01G 11/28

(54) **A SUPERCAPACITOR**
SUPERKONDENSATOR
SUPERCONDENSATEUR

(43) Date of publication of application: 19.06.2019
(73) Proprietor: Hitachi Energy Switzerland AG, 5400 Baden (CH)
(72) Inventor: LAIHONEN, Sari, 724 82 Västerås (SE); ANDERSSON, Anna, 724 65 Västerås (SE)
(74) Representative: Valea AB

(56) References cited:
- EP-A2- 2 662 920
- CA-A1- 2 819 737
- JP-A- 2011 124 104
- US-A1- 2013 078 510
- US-A1- 2017 047 173
- BERGER L I: "CRC Handbook or Chemistry and Physics , Dielectric strength of insulating materials", CRC HANDBOOK OF CHEMISTRY AND PHYSICS, XX, XX, 1 January 2007 (2007-01-01), pages 15-42, XP002450381,
- DEHERYAN S ET AL: "Self-limiting electropolymerization of ultrathin, pinhole-free poly(phenylene oxide) films on carbon nanosheets", CARBON, ELSEVIER, OXFORD, GB, vol. 88, 25 February 2015 (2015-02-25), pages 42-50, XP029150529, ISSN: 0008-6223, DOI: 10.1016/J.CARBON.2015.02.059

## Description

### TECHNICAL FIELD

The present disclosure generally relates to supercapacitors.

### BACKGROUND

Supercapacitors are considered to fill the gap between electrolytic capacitors and rechargeable batteries. Supercapacitors are characterised by having higher capacitance than electrolytic capacitors.

An example of a supercapacitor is disclosed in US20130309527 A1. The supercapacitor comprises an electrode including a conducting layer configured to act, in use, as a charge collector to provide an electrical path for generated and/or stored charge through the conducting layer. There is also provided a barrier layer configured to cover a portion of a surface of the conducting layer such that, when the electrode is in contact with an electrolyte, the electrolyte is prevented from substantially contacting and corroding the conducting layer at the covered portion. The supercapacitor also includes an active electrode element configured for use in generation and/or storing charge. The active electrode element is positioned in a non-covered portion in electrical contact with the conducting layer to prevent the electrolyte from substantially contacting and corroding the conducting layer in the non-covered portion and to also be exposed to the electrolyte to allow for the generation and/or storage of charge and provide the generated/stored charge to the conducting layer.

Document CA2819737 discloses a device according to the preamble of claim 1.

### SUMMARY

The supercapacitor disclosed in US20130309527 is directed to low-power applications. The voltage across the supercapacitor cell, i.e. across the two active electrodes elements is very low, typically between 2-3 Volts. This supercapacitor is therefore not suitable for higher voltage applications, for example in applications involving voltage levels in the order of kilovolts. One solution to this problem is to series-connect a great plurality of supercapacitors, but this requires many supercapacitors connected in series, leaving a large footprint. A parallel connection is often needed in order to obtain the wished capacitance values. In addition, supercapacitor banks require electronics to manage the balancing between and voltage control over all individual cells, which is costly.

In view of the above, a general object of the present disclosure is to provide a supercapacitor which solves or at least mitigates problems of the prior art.

There is hence provided a supercapacitor comprising: a first electrode, a second electrode, an ion carrying medium configured to ionically connect the first electrode and the second electrode, wherein the first electrode has a first electrode ion carrying medium facing surface and the second electrode has a second electrode ion carrying medium facing surface, a first solid electrical insulation layer covering the entire first electrode ion carrying medium facing surface, which thereby defines a barrier between the first electrode and the entire ion carrying medium, and a second solid electrical insulation layer covering the entire second electrode ion carrying medium facing surface, which thereby defines a barrier between the second electrode and the entire ion carrying medium, wherein the material of the first solid electrical insulation layer and of the second solid electrical insulation layer has a dielectric breakdown strength of at least 25 V/µm, and wherein the thickness of the first solid electrical insulation layer and of the second solid electrical insulation layer such that the dielectric breakdown voltage of each of the first solid electrical insulation layer and the second solid electrical insulation layer is at least 2.5 volt.

The first solid electrical insulation layer hence continuously covers the entire first electrode ion carrying medium facing surface and the second solid electrical insulation layer continuously covers the entire second electrode ion carrying medium facing surface. The first solid electrical insulation layer and the second solid electrical insulation layer are thus pinhole-free.

Due to the first solid electrical insulation layer and the second solid electrical insulation layer, the electrical withstand strength of the supercapacitor, or supercapacitor cell, is increased. The cell voltage of the supercapacitor is thus increased. Depending on the thickness and/or material of the first solid electrical insulation layer and the second solid electrical insulation layer, the cell voltage may be set to a desired value.

Furthermore, the supercapacitor will become more mechanically robust, because the dielectric medium is no longer provided by the Helmholtz double layer, which essentially consists of molecules in a liquid electrolyte accumulated at the electrodes, but also by the solid first solid electrical insulation layer and the solid second solid electrical insulation layer. Thus, the present supercapacitor could advantageously be used in applications where strong mechanical vibrations are present.

Additionally, the risk of leakage currents through the ion carrying medium may be reduced.

The energy density in the active volume of a capacitor is proportional to the relative permeability of the dielectric times the square of the electric field.

The energy of a capacitor is proportional to the capacitance times the voltage square.

The energy density for a capacitor is the energy of the capacitor divided by the volume of the capacitor.

The material of the first solid electrical insulation layer and of the second solid electrical insulation layer may according to one example have a dielectric breakdown strength of at least 40 V/µm, for example at least 50 V/µm, such as at least 60 V/µm, or at least 70 V/µm, or at least 80 V/µm, or at least 90 V/µm, such as at least 100 V/µm.

The first solid electrical insulation layer forms a dielectric layer between the ion carrying medium and the first electrode. The second solid electrical insulation layer forms a dielectric layer between the ion carrying medium and the second electrode.

The first solid electrical insulation layer may for example be a coating. The second solid electrical insulation layer may be a coating.

According to one embodiment the first electrode ion carrying medium facing surface includes a plurality of irregularities to increase the surface area of the first electrode.

According to one embodiment the second electrode ion carrying medium facing surface includes a plurality of irregularities to increase the surface area of the second electrode.

One embodiment comprises a first collector and a second collector, wherein the first electrode is provided on the first collector and the second electrode is provided on the second collector.

One embodiment comprises a first terminal and a second terminal, wherein the first collector is electrically connected to the first terminal and the second collector is electrically connected to the second terminal.

According to one embodiment the ion carrying medium is a liquid electrolyte. In this case, the Helmholtz double layers may be formed in the vicinity of the two solid electrical insulation layers when the supercapacitor is charged, providing a dielectric in addition to the first solid electrical insulation layer and the second solid electrical insulation layer.

The liquid electrolyte may be solvent free or solvent-based.

The liquid electrolyte may according to one example be an ionic liquid.

One embodiment comprises a separator configured to mechanically separate the first electrode and the second electrode.

According to one embodiment the ion carrying medium is a solid. This further increases the robustness of the supercapacitor, as in this case the supercapacitor would not contain any liquid electrolyte. The risk of electrolyte leakage is also eliminated.

The separator has the function of mechanically separating the first electrode and the second electrode to prevent short circuiting between these electrodes. In case a solid ion carrying medium is provided, it is not necessary to include a separator in the supercapacitor.

According to one embodiment the ion carrying medium comprises an ion-carrying polymer. An example of an ion-carrying polymer is polyethylene oxide, but there is a plurality of known ion-carrying polymers each of which may be suitable for the present application.

According to one embodiment the ion carrying medium comprises an ion-carrying gel, such as a gel electrolyte.

According to one embodiment first solid electrical insulation layer and the second solid electrical insulation layer each consists of a polymer. Polymers provide good electrical insulation properties, allowing for making the first and the second solid electrical insulation layers thinner.

According to one embodiment the first solid electrical insulation layer is a cross-linked polymer.

According to one embodiment the second solid electrical insulation layer is a cross-linked polymer.

The first solid electrical insulation layer may according to one example comprise a silicone.

The second solid electrical insulation layer may according to one example comprise a silicone.

The present supercapacitor may be of a wound type, where the electrodes are wound, i.e. the first electrode and the second electrode are wound. Also the first and the second solid electrical insulation layer covering the electrodes are wound in this case. If a separator is included this is also wound concurrently with the first electrode and the second electrode. If a solid ion carrying medium is provided, the solid ion carrying medium is wound concurrently with the first electrode and the second electrode. Alternatively, the first electrode and the second electrode may be arranged in a stacked manner together with a plurality of other electrode configured in the same manner as the first electrode and the second electrode with the ion carrying medium provided between each pair of adjacent electrodes.

According to one embodiment the first solid electrical insulation layer (7c) and the second solid electrical insulation layer (7d) each has a dielectric constant less than 10, such as less than 8, such as less than 6, such as less than 5, such as less than 4.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows an example of a supercapacitor in a discharged state;
Fig. 2 shows the voltage distribution across the supercapacitor in Fig. 1; and
Fig. 3 shows the supercapacitor in Fig. 1 in a charged state.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

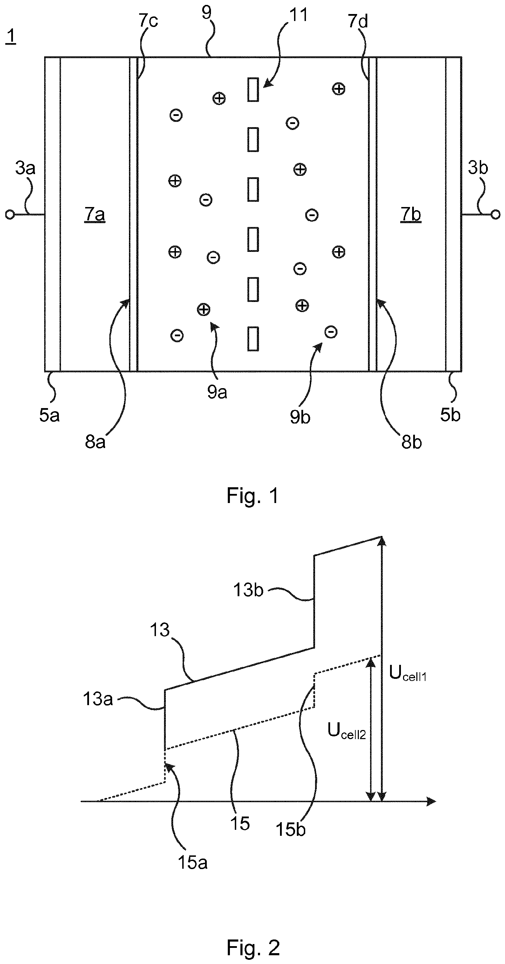

Fig. 1 shows an example of a supercapacitor in a discharged state. The supercapacitor 1 comprises a first terminal 3a, a second terminal 3b, a first collector 5a, a second collector 5b, a first electrode 7a, a second electrode 7b, and an ion carrying medium 9 which ionically connects the first electrode 7a and the second electrode 7b. The ion carrying medium 9 is provided between the first electrode 7a and the second electrode 7b.

The ion carrying medium 9 includes a plurality of ions 9a, 9b, some of which are positive ions 9a and some of which are negative ions 9b. In the discharged state shown in Fig. 1, positive and negative ions 9a, 9b are randomly distributed in the ion carrying medium 9. The positive and negative ions 9a, 9b may in the discharged state thus be located in the vicinity of both the first electrode 7a and the second electrode 7b.

The ion carrying medium 9 may be a liquid ion carrying medium or a solid ion carrying medium. In case of a liquid ion carrying medium, the ion carrying medium 9 may be an electrolyte. In this case, the supercapacitor 1 comprises a separator 11 which is electrically insulating. The separator 11 is configured to be permeable for ions dispersed in the ion carrying medium 9, i.e. in the electrolyte. The separator 11 is configured to mechanically separate the first electrode 7a and the second electrode 7b. Short circuiting between the first electrode 7a and the second electrode 7b may thereby be avoided.

In case of a solid ion carrying medium, the ion carrying medium 9 may be any suitable solid with ion-carrying characteristics, for example a polymer such as polyethylene oxide.

The first terminal 3a and the second terminal 3b are configured to be connected to a power source for charging the supercapacitor 1. The first terminal 3a is electrically connected to the first collector 5a. The second terminal 3b is electrically connected to the second collector 5b.

The first electrode 7a is provided on the first collector 5a. The first electrode 7a and the first collector 5a are electrically connected. The first electrode 7a has a first electrode ion carrying medium facing surface 8a. The first electrode ion carrying medium facing surface 8a is the active surface of the first electrode 7a. The first electrode ion carrying medium facing surface 8a is that surface of the first electrode 7a which is closest to the ion carrying medium 9.

The supercapacitor 1 comprises a first solid electrical insulation layer 7c and a second solid electrical insulation layer 7d. The first electrode ion carrying medium facing surface 8a is entirely covered with the first solid electrical insulation layer 7c. The first solid electrical insulation layer 7c hence defines a barrier between the entire first electrode ion carrying medium facing surface 8a and the ion carrying medium 9. To this end, the first electrode 7a is nowhere in direct contact with the ion carrying medium 9. The first solid electrical insulation layer 7c defines an interface between the first electrode 7a and the entire ion carrying medium 9.

Typically the first electrode ion carrying medium facing surface 8a is irregular. The first electrode ion carrying medium facing surface 8a is irregular to maximise the surface area thereof. Since the capacitance is proportional to the surface area, i.e. the area of the first electrode ion carrying medium facing surface 8a, it is generally desirable to make the first electrode ion carrying medium facing surface 8a irregular.

The first electrode 7a may for example be composed of a porous carbon, graphene or any other suitable material as would be known to the person skilled in the art.

The second electrode 7b is provided on the second collector 5b. The second electrode 7b and the second collector 5b are electrically connected. The second electrode 7b has a second electrode ion carrying medium facing surface 8b. The second electrode ion carrying medium facing surface 8b is the active surface of the second electrode 7b. The second electrode ion carrying medium facing surface 8b is that surface of the second electrode 7b which is closest to the ion carrying medium 9.

The second electrode ion carrying medium facing surface 8b is entirely covered with the second solid electrical insulation layer 7d. The second solid electrical insulation layer 7d hence defines a barrier between the entire second electrode ion carrying medium facing surface 8b and the ion carrying medium 9. To this end, the second electrode 7b is nowhere in direct contact with the ion carrying medium 9. The second solid electrical insulation layer 7d defines an interface between the second electrode 7b and the entire ion carrying medium 9.

Typically the second electrode ion carrying medium facing surface 8b is irregular. The second electrode ion carrying medium facing surface 8b is irregular to maximise the surface area thereof.

The second electrode 7b may for example be composed of a porous carbon, graphene or any other suitable material as would be known to the person skilled in the art.

The material of the first solid electrical insulation layer 7c and of the second solid electrical insulation layer 7d has a dielectric breakdown strength of at least 25 V/µm, such as at least 35 V/ µm, such as at least 40 V/ µm, for example at least 45 V/ µm.

The thickness of the first solid electrical insulation layer 7c and of the second solid electrical insulation layer 7d is selected so that the dielectric breakdown voltage of each of the first and the second solid electrical insulation layer 7c and 7d is at least 2.5 V, such as at least 3.5 V, such as at least 4V, such as at least 4.5 V. These parameters may be determined/verified using standard dielectric strength tests.

The voltages mentioned are typically DC voltages.

Fig. 2 shows the cell voltage drop across two supercapacitors. The first graph 13 with mainly solid lines shows an example of cell voltage drop across the exemplified supercapacitor 1. The second graph 15 with dashed lines shows the cell voltage drop across a common supercapacitor which does not have any solid electrical insulating coating on the entire electrolyte facing electrode surfaces.

The steps 13a and 13b of the first graph 13 show the voltage drop across the first solid electrical insulation layer 7c and the second solid electrical insulation layer 7d, respectively. Compared to the corresponding steps 15a and 15b of the second graph 15, which are obtained only due to the Helmholtz double layers, the dielectric layers formed by the first solid electrical insulation layer 7c and the second solid electrical insulation layer 7d have a much higher electric withstand strength. This results in that the cell voltage U_{cell1} of the exemplified supercapacitor 1 is much larger than the cell voltage U_{cell2} of the common supercapacitor.

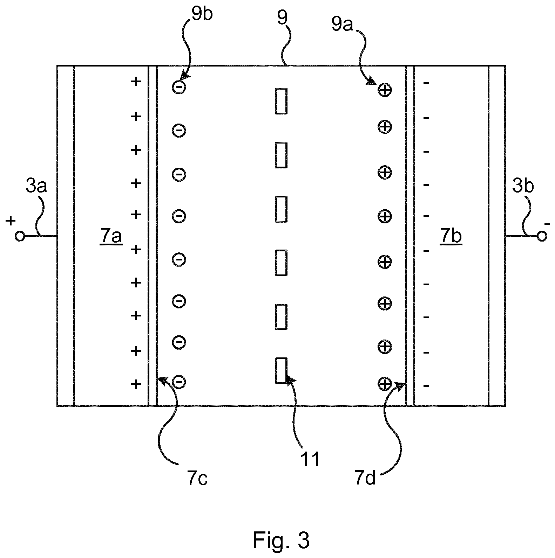

Fig. 3 shows the supercapacitor 1 in a charged state. Here, a voltage has been applied to the first terminal 3a and the second terminal 3b. In this example, the first terminal 3a is the positive pole and the second terminal 3b is the negative pole. The first electrode 7a is hence charged positively and the second electrode 7b is charged negatively. The negative ions 9b have moved towards the first solid electrical insulation layer 7c and the positive ions 9a have moved towards the second solid electrical insulation layer 7d. Some ions have had to move through the separator 11 to obtain this charge distribution. In this example the dielectric between the positively charged first electrode 7a and the negative ions 9b is formed by the first solid electrical insulation layer 7c and a Helmholtz double layer. The dielectric between the negatively charged second electrode 7b and the positive ions 9a is formed by the second solid electrical insulation layer 7d and a Helmholtz double layer.

The desired cell voltage and energy density may be obtained based on the thickness and/or choice of material of the first solid electrical insulation layer 7c and of the second solid electrical insulation layer 7d.

According to one example, electrical insulation materials with low surface energy may be used to form the first solid electrical insulation layer 7c and the second solid electrical insulation layer 7d. An example of such a material is silicone. These type of materials easily wet the surface of the first electrode ion carrying medium facing surface 8a and the second electrode ion carrying medium facing surface 8b.

The first solid electrical insulation layer 7c may according to one example be provided onto the first electrode ion carrying medium facing surface 8a by attracting an electrical insulating material thereon by means of electrostatic forces. The first electrode 7a may thus be charged to attract the material forming the first solid electrical insulation layer 7c. In case the first solid electrical insulation layer 7c is a polymer, it may be cross-linked after it has been applied to the first electrode ion carrying medium facing surface 8a.

The second solid electrical insulation layer 7d may according to one example be provided onto the second electrode ion carrying medium facing surface 8b by attracting an electrical insulating material thereon by means of electrostatic forces. The second electrode 7b may thus be charged to attract the material forming the second solid electrical insulation layer 7d. In case the second solid electrical insulation layer 7d is a polymer, it may be cross-linked after it has been applied to the second electrode ion carrying medium facing surface 8b.

According to yet another alternative, the first solid electrical insulation layer 7c and the second solid electrical insulation layer 7d may be obtained using a Layer by Layer (LbL) method. In this case, the first solid electrical insulation layer 7c and the second solid electrical insulation layer 7d may each comprise a plurality of sub-layers. The deposition of the electrical insulation material, in particular polyions, i.e. ionised polymers, may in this case be made (sub)layer by (sub)layer by attraction onto the first electrode ion carrying medium facing surface and the second electrode ion carrying medium facing surface. Very thin pinhole free first and second solid electrical insulation layers 7c and 7d may thus be obtained.

### Other examples of production methods may involve one of the following:

Electropolymerisation, as for example disclosed in "self-limiting electropolymerization of ultrathin, pinhole-free poly(phenylene oxide) films on carbon nanosheets, by S. Deheryan et al., published in Carbon 88 (2015), pp. 42-50.

Surface initiated polymerisation (SIP), as for example disclosed in "Surface-initiated ring-opening metathesis polymerization of 5-(perfuourhexyl)norbornene on carbon paper electrodes", by C.J. Faulkner et al., published in the Journal of Colloid and Interface Science 351 (2010), pp. 248-253.

Polymerisation of self-assembling monomers, as for example disclosed in "In situ crosslinking of surface-initiated ring opening metathesis polymerization of polynorbornene for improved stability", by I.A. Fursule et al., published in the Journal of Colloid and Interface Science 510 (2018), pp. 86-94.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A supercapacitor (1) comprising:
a first electrode (7a),
a second electrode (7b),
an ion carrying medium (9) configured to ionically connect the first electrode (7a) and the second electrode (7b),
wherein the first electrode (7a) has a first electrode ion carrying medium facing surface (8a) and the second electrode (7b) has a second electrode ion carrying medium facing surface (8b),
a first solid electrical insulation layer (7c) covering the entire first electrode ion carrying medium facing surface (8a), which thereby defines a barrier between the first electrode (7a) and the entire ion carrying medium (9), and
a second solid electrical insulation layer (7d) covering the entire second electrode ion carrying medium facing surface (8b), which thereby defines a barrier between the second electrode (7b) and the entire ion carrying medium (9),
**characterised in that**
the material of the first solid electrical insulation layer (7c) and of the second solid electrical insulation layer (7d) has a dielectric breakdown strength of at least 25 V/µm, and wherein the thickness of the first solid electrical insulation layer (7c) and of the second solid electrical insulation layer (7d) is such that the dielectric breakdown voltage of each of the first solid electrical insulation layer (7c) and the second solid electrical insulation layer (7d) is at least 2.5 volt.

2. The supercapacitor (1) as claimed in claim 1, wherein the first electrode ion carrying medium facing surface (8a) includes a plurality of irregularities to increase the surface area of the first electrode (7a).

3. The supercapacitor (1) as claimed in claim 1 or 2, wherein the second electrode ion carrying medium facing surface (8b) includes a plurality of irregularities to increase the surface area of the second electrode (7b).

4. The supercapacitor (1) as claimed in any of the preceding claims, comprising a first collector (5a) and a second collector (5b), wherein the first electrode (7a) is provided on the first collector (5a) and the second electrode (7b) is provided on the second collector (5b).

5. The supercapacitor (1) as claimed in claim 4, comprising a first terminal (3a) and a second terminal (3b), wherein the first collector (5a) is electrically connected to the first terminal (3a) and the second collector (5b) is electrically connected to the second terminal (3b).

6. The supercapacitor (1) as claimed in any of the preceding claims, wherein the ion carrying medium (9) is a liquid electrolyte.

7. The supercapacitor (1) as claimed in claim 6, comprising a separator (11) configured to mechanically separate the first electrode (7a) and the second electrode (7b).

8. The supercapacitor (1) as claimed in any of claims 1-5, wherein the ion carrying medium (9) is a solid.

9. The supercapacitor (1) as claimed in claim 8, wherein the ion carrying medium (9) comprises an ion-carrying polymer.

10. The supercapacitor (1) as claimed in any of the preceding claims, wherein the first solid electrical insulation layer (7c) and the second solid electrical insulation layer (7d) each consists of a polymer.

11. The supercapacitor (1) as claimed in claim 10, wherein the first solid electrical insulation layer (7c) is a cross-linked polymer.

12. The supercapacitor (1) as claimed in claim 10 or 11, wherein the second solid electrical insulation layer (7d) is a cross-linked polymer.

13. The supercapacitor (1) as claimed in any of the preceding claims, wherein the first solid electrical insulation layer (7c) and the second solid electrical insulation layer (7d) each has a dielectric constant less than 10, such as less than 8, such as less than 6, such as less than 5, such as less than 4.

14. The supercapacitor (1) as claimed in any of the preceding claims, wherein the material of the first solid electrical insulation layer (7c) and of the second solid electrical insulation layer (7d) has a dielectric breakdown strength of at least 40 V/µm, for example at least 50 V/µm, such as at least 60 V/µm, or at least 70 V/µm, or at least 80 V/µm, or at least 90 V/µm, such as at least 100 V/µm.

15. The supercapacitor (1) as claimed in any of the preceding claims, wherein the supercapacitor (1) is a wound supercapacitor (1).

## Patentansprüche

1. Superkondensator (1), umfassend:
eine erste Elektrode (7a),
eine zweite Elektrode (7b),
ein Ionen tragendes Medium (9), das ausgestaltet ist, um die erste Elektrode (7a) und die zweite Elektrode (7b) ionisch zu verbinden,
wobei die erste Elektrode (7a) eine zum Ionen tragenden Medium weisende Oberfläche (8a) der ersten Elektrode aufweist, und die zweite Elektrode (7b) eine zum Ionen tragenden Medium weisende Oberfläche (8b) der zweiten Elektrode aufweist,
eine erste massive elektrische Isolierschicht (7c), welche die gesamte zum Ionen tragenden Medium weisende Oberfläche (8a) der ersten Elektrode bedeckt, wodurch eine Barriere zwischen der ersten Elektrode (7a) und dem gesamten Ionen tragenden Medium (9) definiert wird, und
eine zweite massive elektrische Isolierschicht (7d), welche die gesamte zum Ionen tragenden Medium weisende Oberfläche (8b) der zweiten Elektrode bedeckt, wodurch eine Barriere zwischen der zweiten Elektrode (7b) und dem gesamten Ionen tragenden Medium (9) definiert wird, **dadurch gekennzeichnet, dass** das Material der ersten massiven elektrischen Isolierschicht (7c) und der zweiten massiven elektrischen Isolierschicht (7d) eine Durchschlagsfestigkeit von zumindest 25 V/µm hat, und
wobei die Dicke der ersten massiven elektrischen Isolierschicht (7c) und der zweiten massiven elektrischen Isolierschicht (7d) derart ist, dass die Durchschlagsfestigkeit von jeder von der ersten massiven elektrischen Isolierschicht (7c) und der zweiten massiven elektrischen Isolierschicht (7d) mindestens 2,5 Volt beträgt.

2. Superkondensator (1) nach Anspruch 1, wobei die zum Ionen tragenden Medium weisende Oberfläche (8a) der ersten Elektrode eine Vielzahl von Unregelmäßigkeiten einschließt, um den Flächeninhalt der ersten Elektrode (7a) zu erhöhen.

3. Superkondensator (1) nach Anspruch 1 oder 2, wobei die zum Ionen tragenden Medium weisende Oberfläche (8b) der zweiten Elektrode eine Vielzahl von Unregelmäßigkeiten einschließt, um den Flächeninhalt der zweiten Elektrode (7b) zu erhöhen.

4. Superkondensator (1) nach einem der vorhergehenden Ansprüche, umfassend einen ersten Kollektor (5a) und einen zweiten Kollektor (5b), wobei die erste Elektrode (7a) auf dem ersten Kollektor (5a) bereitgestellt wird, und die zweite Elektrode (7b) auf dem zweiten Kollektor (5b) bereitgestellt wird.

5. Superkondensator (1) nach Anspruch 4, umfassend eine erste Anschlussklemme (3a) und eine zweite Anschlussklemme (3b), wobei der erste Kollektor (5a) elektrisch mit der ersten Anschlussklemme (3a) verbunden ist, und der zweite Kollektor (5b) elektrisch mit der zweiten Anschlussklemme (3b) verbunden ist.

6. Superkondensator (1) nach einem der vorhergehenden Ansprüche, wobei das Ionen tragende Medium (9) ein flüssiger Elektrolyt ist.

7. Superkondensator (1) nach Anspruch 6, umfassend einen Separator (11), der ausgestaltet ist, um die erste Elektrode (7a) und die zweite Elektrode (7b) mechanisch zu trennen.

8. Superkondensator (1) nach einem der Ansprüche 1 bis 5, wobei das Ionen tragende Medium (9) ein Feststoff ist.

9. Superkondensator (1) nach Anspruch 8, wobei das Ionen tragende Medium (9) ein Ionen tragendes Polymer umfasst.

10. Superkondensator (1) nach einem der vorhergehenden Ansprüche, wobei die erste massive elektrische Isolierschicht (7c) und die zweite massive elektrische Isolierschicht (7d) jeweils aus einem Polymer bestehen.

11. Superkondensator (1) nach Anspruch 10, wobei die erste massive elektrische Isolierschicht (7c) ein vernetztes Polymer ist.

12. Superkondensator (1) nach Anspruch 10 oder 11, wobei die zweite massive elektrische Isolierschicht (7d) ein vernetztes Polymer ist.

13. Superkondensator (1) nach einem der vorhergehenden Ansprüche, wobei die erste massive elektrische Isolierschicht (7c) und die zweite massive elektrische Isolierschicht (7d) jeweils eine Dielektrizitätskonstante von weniger als 10, wie weniger als 8, wie weniger als 6, wie weniger als 5, wie weniger als 4 aufweisen.

14. Superkondensator (1) nach einem der vorhergehenden Ansprüche, wobei das Material der ersten massiven elektrischen Isolierschicht (7c) und der zweiten massiven elektrischen Isolierschicht (7d) eine Durchschlagsfestigkeit von mindestens 40 V/µm, beispielsweise mindestens 50 V/µm, wie mindestens 60 V/µm oder mindestens 70 V/µm oder mindestens 80 V/µm oder mindestens 90 V/µm aufweist, wie mindestens 100 V/µm.

15. Superkondensator (1) nach einem der vorhergehenden Ansprüche, wobei der Superkondensator (1) ein gewickelter Superkondensator (1) ist.

## Revendications

1. Supercondensateur (1) comprenant :
une première électrode (7a),
une deuxième électrode (7b),
un milieu de transport d'ions (9) configuré pour relier ioniquement la première électrode (7a) et la deuxième électrode (7b),
la première électrode (7a) ayant une surface de première électrode faisant face au milieu de transport d'ions (8a) et la deuxième électrode (7b) ayant une surface de deuxième électrode faisant face au milieu de transport d'ions (8b),
une première couche d'isolation électrique solide (7c) recouvrant la totalité de la surface de première électrode faisant face au milieu de transport d'ions (8a), laquelle définit ainsi une barrière entre la première électrode (7a) et la totalité du milieu de transport d'ions (9), et
une deuxième couche d'isolation électrique solide (7d) recouvrant la totalité de la surface de deuxième électrode faisant face au milieu de transport d'ions (8b), laquelle définit ainsi une barrière entre la deuxième électrode (7b) et la totalité du milieu de transport d'ions (9),
**caractérisé en ce que**
le matériau de la première couche d'isolation électrique solide (7c) et de la deuxième couche d'isolation électrique solide (7d) a une résistance à la rupture diélectrique d'au moins 25 V/µm, et dans lequel l'épaisseur de la première couche d'isolation électrique solide (7c) et de la deuxième couche d'isolation électrique solide (7d) est telle que la tension de rupture diélectrique à la fois de la première couche d'isolation électrique solide (7c) et de la deuxième couche d'isolation électrique solide (7d) est d'au moins 2,5 volts.

2. Supercondensateur (1) selon la revendication 1, dans lequel la surface de première électrode faisant face au milieu de transport d'ions (8a) comporte une pluralité d'irrégularités pour augmenter la superficie de la première électrode (7a).

3. Supercondensateur (1) selon la revendication 1 ou 2, dans lequel la surface de deuxième électrode faisant face au milieu de transport d'ions (8b) comporte une pluralité d'irrégularités pour augmenter la superficie de la deuxième électrode (7b).

4. Supercondensateur (1) selon l'une quelconque des revendications précédentes, comprenant un premier collecteur (5a) et un deuxième collecteur (5b), dans lequel la première électrode (7a) est disposée sur le premier collecteur (5a) et la deuxième électrode (7b) est disposée sur le deuxième collecteur (5b).

5. Supercondensateur (1) selon la revendication 4, comprenant une première borne (3a) et une deuxième borne (3b), dans lequel le premier collecteur (5a) est relié électriquement à la première borne (3a) et le deuxième collecteur (5b) est relié électriquement à la deuxième borne (3b).

6. Supercondensateur (1) selon l'une quelconque des revendications précédentes, dans lequel le milieu de transport d'ions (9) est un électrolyte liquide.

7. Supercondensateur (1) selon la revendication 6, comprenant un séparateur (11) configuré pour séparer mécaniquement la première électrode (7a) et la deuxième électrode (7b).

8. Supercondensateur (1) selon l'une quelconque des revendications 1 à 5, dans lequel le milieu de transport d'ions (9) est un solide.

9. Supercondensateur (1) selon la revendication 8, dans lequel le milieu de transport d'ions (9) comprend un polymère de transport d'ions.

10. Supercondensateur (1) selon l'une quelconque des revendications précédentes, dans lequel la première couche d'isolation électrique solide (7c) et la deuxième couche d'isolation électrique solide (7d) consistent chacune en un polymère.

11. Supercondensateur (1) selon la revendication 10, dans lequel la première couche d'isolation électrique solide (7c) est un polymère réticulé.

12. Supercondensateur (1) selon la revendication 10 ou 11, dans lequel la deuxième couche d'isolation électrique solide (7d) est un polymère réticulé.

13. Supercondensateur (1) selon l'une quelconque des revendications précédentes, dans lequel la première couche d'isolation électrique solide (7c) et la deuxième couche d'isolation électrique solide (7d) ont chacune une constante diélectrique inférieure à 10, comme inférieure à 8, comme inférieure à 6, comme inférieure à 5, comme inférieure à 4.

14. Supercondensateur (1) selon l'une quelconque des revendications précédentes, dans lequel le matériau de la première couche d'isolation électrique solide (7c) et de la deuxième couche d'isolation électrique solide (7d) a une résistance à la rupture diélectrique d'au moins 40 V/µm, par exemple au moins 50 V/µm, comme au moins 60 V/µm,, ou au moins 70 V/µm, ou au moins 80 V/µm, ou au moins 90 V/µm, comme au moins 100 V/µm.

15. Supercondensateur (1) selon l'une quelconque des revendications précédentes, le supercondensateur (1) étant un supercondensateur bobiné (1).
